(19) Europäisches Patentamt / European Patent Office / Office européen des brevets

(11) **EP 1 906 217 A1**

(12) **EUROPEAN PATENT APPLICATION**
published in accordance with Art. 153(4) EPC

(43) Date of publication:
**02.04.2008 Bulletin 2008/14**

(51) Int Cl.:
***G02B 6/00*** *(2006.01)*

(21) Application number: **06745464.5**

(22) Date of filing: **19.04.2006**

(86) International application number:
**PCT/JP2006/308232**

(87) International publication number:
**WO 2006/137212 (28.12.2006 Gazette 2006/52)**

(84) Designated Contracting States:
**DE FR IT**

(30) Priority: **22.06.2005 JP 2005182468**

(71) Applicant: **Shin-Etsu Chemical Company, Ltd.**
**Tokyo 100-0004 (JP)**

(72) Inventor: **INOUE, Dai**
**c/o Shin-Etsu Chemical Co., Ltd., 1-10,**
**Gunma;3790224 (JP)**

(74) Representative: **Pfenning, Meinig & Partner GbR**
**Joachimstaler Strasse 12**
**10719 Berlin (DE)**

(54) **METHOD FOR TREATING OPTICAL FIBER**

(57)     Included are starting processing to expose the optical fiber to an atmosphere that contains deuterium; and monitoring a loss value of the optical fiber with respect to propagation light having a wavelength at or in the vicinity of 1714 nm, and ending the processing to expose the optical fiber when a change quantity of the loss value has exceeded a predetermined value. The monitoring of the loss value is pursued by, while exposing the optical fiber to an atmosphere that contains deuterium, causing propagation light having a wavelength at or in the vicinity of 1714 nm to be incident from one end of the optical fiber, monitoring the propagation light emitted from the other end of the optical fiber, and measuring a loss value of the optical fiber. According to this, it is possible to manufacture an optical fiber having an excellent hydrogen resistance characteristic assuredly and at low cost.

CHANGE IN LOSS SPECTRUM DUE TO DEUTERIUM PROCESSING

FIG. 2

EP 1 906 217 A1

## Description

TECHNICAL FIELD

The present invention relates to a processing method of an optical fiber. In more detail, the present invention relates to a processing method for improving a hydrogen resistance characteristic of an optical fiber employed for a transmission medium of an optical signal.

The present application claims priority from a Japanese Patent Application No. 2005-182468 filed on June 22, 2005, the contents of which are incorporated herein by reference, if applicable.

BACKGROUND ART

In an optical fiber, the peak (hereinafter referred to as "WP") of an absorption loss attributable to the OH-group in the optical fiber lies in the band of a wavelength of 1383 nm. For this reason, in optical communication using an optical fiber as a transmission medium, a wavelength band around 1400 nm is not used as a signal wavelength. However, as a communication technology such as CWDM and a technology such as a Raman amplification have been developed, an optical fiber whose WP is extremely small has come to be demanded.

WP is known to increase when an optical fiber is exposed to an atmosphere containing hydrogen. An optical fiber tends to include such structural defects as Si/(E' center), Si-O/(non bridging oxygen hole center, NBOHC), Si-O-O/(peroxy radical) in many cases. The mechanism for WP increase due to oxygen is considered such that diffused oxygen is combined with NBOHC to form an OH-group. Taking into consideration that an optical fiber once installed will be used for a long period of time, an optical fiber whose hydrogen resistance characteristic is high is desired for maintaining a small WP not only in the initial state but also even after the optical fiber is exposed to an atmosphere containing hydrogen.

The patent document No.1, the patent document No. 2, and the patent document No. 3 disclose a method of improving a hydrogen resistance characteristic of an optical fiber by performing deuterium processing for exposing the optical fiber to an atmosphere containing deuterium. Furthermore, a non-patent document No. 1 recites that when an optical fiber is exposed to deuterium, the absorption due to deuterium molecules is observed with a peak centering around the wavelength of 1714 nm.

A hydrogen resistance characteristic of an optical fiber is evaluated by a test method defined in an international standard IEC 60793-2. This test method is performed as follows. First, an optical fiber to be evaluated is exposed to an atmosphere containing 1% hydrogen and at a room temperature and at normal pressures, until the loss at the wavelength of 1240 nm becomes 0.03 dB/km or above. Next, after leaving the resulting optical fiber in the atmosphere for 14 days, WP thereof is measured and is compared to the value prior to the test.

In the above-described method, it takes about 3 to 7 days, before the loss of an optical fiber at the wavelength of 1240 nm becomes 0.03 dB/km or above. This further means that it takes about 3 weeks before being able to evaluate the hydrogen resistance characteristic of the optical fiber. Consequently, such an evaluation method is not suitable as a product evaluation method for use during industrial optical fiber production processes. Moreover, according to this method, it becomes necessary to cut off a measurement sample of a length of 1km or above from an optical fiber to be evaluated, and the evaluation sample is doomed to be discarded after the evaluation. This will reduce the real yield ratio of the product, which constitutes another reason why this evaluation method is not suitable for industrial application.

In contrast, a non-patent document No. 2 reports that, when an optical fiber is exposed to an atmosphere containing hydrogen, the absorption peak around the wavelength of 630 nm is lowered. That is, there are cases where, when the loss of the optical fiber is measured, the absorption peak is generated around the wavelength of 630 nm. This absorption peak around the wavelength of 630 nm is considered to be attributed to NBOHC. In addition, a patent document No. 4 discloses a relationship between the absorption loss of the wavelength at 630 nm and WP. It is contemplated to evaluate the hydrogen resistance characteristic by measuring the absorption loss at the wavelength of 630 nm, based on this relationship.

However, the patent document No. 4 does not mention a determining method of the absorption peak around 630 nm. The patent document No. 4 does not mention the activity of the absorption peak around 630 nm, when the optical fiber is exposed to an atmosphere containing deuterium at all either. Taking into account the fact that the Rayleigh scatter coefficient A can differ for each optical fiber in the following expression 1 showing the loss $\alpha$ of an optical fiber, there will be cases where the size of the absorption peak around 630 nm cannot be effectively determined depending on the difference in Rayleigh scatter coefficient A unless the determining method of an absorption peak is not determined. In contrast, a patent document No. 5 discloses that NBOHC was confirmed to be vanished due to the effect of the deuterium processing, by examining the change in loss in the band having a wavelength of 630 nm.

Expression 1:

$$\alpha = A/\lambda^4 + \alpha_{IM} + \alpha_{IR}(\lambda) + \alpha_{other}(\lambda)$$

In the above expression 1, $\alpha$ represents a loss, A represents a Rayleigh scatter coefficient, $\alpha_{IM}$ represents a structure incompletion loss, $\alpha_{IR}$ represents an infrared absorption loss, and $\alpha_{other}$ represents other types of absorption loss attributable to impurity or the like.

Patent Document No. 1: Patent No. 1721913
Patent Document No. 2: Great Britain Patent Application Publication No. 2149392 Specification
Patent Document No. 3: European Patent Application Publication No. 1182176 Specification
Patent Document No. 4: Japanese Patent Application Publication No. H9-132430
Patent Document No. 5: Japanese Patent Application Publication No. 2004-317750
Non-Patent Document No. 1: IEE PROCEEDINGS, Vol. 132, Pt. J, No. 3, JUNE 1985, pp.172-176
Non-Patent Document No. 2: OFC1999, PD22-1

DISCLOSURE OF THE INVENTION

PROBLEMS TO BE SOLVED BY THE INVENTION

As disclosed above, some optical fibers are required to be endowed with a high hydrogen resistance characteristic depending on their usages. An optical fiber for such a usage desirably undergoes an evaluation for its hydrogen resistance characteristic during the manufacturing process. However, the test operation for the hydrogen resistance evaluation test defined in IEC 60793-2 takes a great amount of time, and an optical fiber used as a measurement sample has to be discarded eventually.

In view of this, it is proposed to confirm the effect of the deuterium processing according to the method recited in the Patent Document No. 5. However, the loss of an optical fiber at the wavelength of 630 nm is extremely large as about 7dB/km in the state where there is no defect in the optical fiber. In addition, in many cases the optical fiber as an industrial product is such that 25 km or above of optical fiber is wound to one spool. It is not possible to measure the loss at the wavelength of 630 nm for the entire spool. Part of the optical fiber wound to the spool should be cut off to be used as a measurement sample, for confirming the effect of the deuterium processing. Accordingly, there still remains a problem that part of the product is doomed to be discarded as a measurement sample.

In view of this, demanded is a method enabling to easily and assuredly confirm that deuterium processing has been sufficiently pursued, and also enabling to finish an evaluation operation in a short period of time. Another technical problem to be solved is to reduce the amount of optical fiber discarded incident to measurement of the deuterium processing effect.

MEANS FOR SOLVING THE PROBLEMS

So as to solve the above-described problems, as a first embodiment of the present invention, provided is a processing method for an optical fiber, including: starting processing to expose the optical fiber to an atmosphere that contains deuterium; and monitoring a loss value of the optical fiber with respect to propagation light having a wavelength at or in the vicinity of 1714 nm, and ending the processing to expose the optical fiber when a change quantity of the loss value has exceeded a predetermined value. According to this, it becomes possible to conduct deuterium processing by confirming its effect. This helps assuredly achieve an effect, and avoid to take an excessive process time. Moreover, since it becomes unnecessary to conduct an evaluation test after the deuterium processing, it is possible to reduce the time required until the optical fiber product is shipped. Furthermore, it becomes unnecessary to cut off a sample for evaluation purpose, and so the yield ratio of the product will be enhanced.

As a second embodiment of the present invention, provided is a processing method for an optical fiber, including: starting processing to expose the optical fiber to an atmosphere that contains deuterium; causing propagation light having a wavelength at or in the vicinity of 1714 nm to be incident from one end of the optical fiber exposed to the deuterium, monitoring the propagation light emitted from the other end of the optical fiber, and measuring a loss value of the optical fiber; and ending the processing to expose the optical fiber when a change quantity of the loss value has exceeded a predetermined value. According to this, it is possible to monitor the loss change for the optical fiber with use of a simple apparatus, during the deuterium processing. In addition, it is possible to monitor the loss change for the entire optical fiber, without cutting off part of the optical fiber as a test sample.

Furthermore as one embodiment, in the processing method, a wavelength for which the loss value is monitored is in the range between 1709 nm or more and 1719 nm or less. According to this, it is possible to assuredly detect diffusion of deuterium and extinction of NBOHC. In addition, it is possible to monitor the entire optical fiber being the target.

Furthermore, according to one embodiment, in the processing method, the predetermined value is a value obtained by adding 0.01dB/km or more to the loss value at the time of starting the processing to expose the optical fiber. According to this, it is possible to confirm the effective effect of the deuterium processing, without being exposed to influence of variation of an individual Rayleigh scatter coefficient A for the optical fiber being the monitoring target. Note that when a value in which the increase in loss value is lower than 0.01dB/km is selected, the effect of the deuterium processing is small, and it is not possible to obtain significant improvement in hydrogen resistance characteristic.

Still further, according to one embodiment, in the processing method, the predetermined range is a value obtained by adding 0.03dB/km or more to the loss value at the time of starting the processing to expose the optical fiber. According to this, it is possible to confirm the effective effect of the deuterium processing, without being exposed to influence of variation of an individual Rayleigh scatter coefficient A for the optical fiber being the monitoring target. Note that if a value in which the increase in loss value is lower than 0.03dB/km is selected, there are cases where NBOHC remains in the optical fiber. Accordingly, it is possible to manufacture an optical fiber product having a high hydrogen resistance characteristic, by selecting a value increased to 0.03dB/km or above.

EFFECT OF THE INVENTION

As described above, according to a method according to the present invention, it is possible to easily and assuredly detect diffusion of deuterium and extinction of NBOHC, by performing deuterium processing, according to a unique method of monitoring the loss of the optical fiber at the wavelength of 1714 nm. In addition, since it is possible to perform deuterium processing by confirming the effect, it is possible to avoid to take an excessive process time while achieving an assured effect at the same time. Furthermore, it becomes unnecessary to perform an evaluation test after performance of the deuterium processing, and so it is possible to reduce the time required until the optical fiber product is shipped. Furthermore, the entire optical fiber being the target of deuterium processing can be set as a target of monitoring. This makes it unnecessary to cut off a sample for evaluation purpose, and so the yield ratio of the product will be enhanced.

The disclosure of the invention described above does not necessarily describe all necessary features of the present invention. Any sub-combination of the features described above may also constitute the present invention.

BRIEF DESCRIPTION OF THE DRAWINGS

Fig. 1 is a graph showing the change in loss spectrum due to deuterium processing.
Fig. 2 is a graph showing an enlarged view of the band from 1200 nm to 1700 nm, in the graph of Fig. 1.
Fig. 3 is a graph showing a change in loss due to a hydrogen test of an optical fiber exposed to the deuterium atmosphere.
Fig. 4 is a graph showing a change in loss due to a hydrogen test of an optical fiber not exposed to the deuterium atmosphere.

BEST MODE FOR CARRYING OUT THE INVENTION

As follows, an aspect of the present invention is described by embodiments. The following embodiments do not limit the invention that relates to the claims and not all combinations of the features described in the embodiments are necessarily essential to means for solving the problems of the invention.

(First Embodiment Example)

An optical fiber having a small WP is manufactured, and a length of 25km from the optical fiber is wound to a spool as an evaluation sample. In addition, from the same optical fiber, a length of 2km of a preliminary evaluation sample is cut off, for use in an effect measurement of the deuterium processing detailed later. Furthermore, from the same optical fiber, a length of 2km of optical fiber is further cut off and stored as a comparison sample.

Prior to the deuterium processing, the loss spectrum of each of the evaluation sample and the preliminary evaluation sample is measured. At the wavelength of 630 nm, a large absorption loss peak of 6dB/km is measured for a preliminary evaluation sample having a length of 2km. In contrast, for an evaluation sample having a length of 25km, the loss at 630 nm was too large and so the loss per unit length could not be measured. The loss at the wavelength of 1714 nm was measured to be 0.750dB/km, for both of the evaluation sample and the preliminary evaluation sample.

Next, the evaluation sample having a length of 25km and the preliminary evaluation sample having a length of 2km were exposed to the deuterium processing in one apparatus and at the same time. The atmosphere of the optical fiber during the processing was a room temperature and at atmospheric pressures, and includes 1% deuterium and 99% nitrogen. Furthermore, both ends of the evaluation sample having a length of 25km were drawn from the processing chamber, to be connected to the light source and the light receiving section of the light loss measurement device, respectively. Under these conditions, the deuterium processing was started by monitoring the change in the loss value for the evaluation sample at the wavelength of 1714 nm.

After the samples continued to be exposed to the deuterium atmosphere for 3 days, the loss value reached 0.760dB/km at the 1714nm being the target of monitoring. Compared to the time when the deuterium processing started, 0.01dB/km increase has been confirmed, and so the deuterium processing was ended.

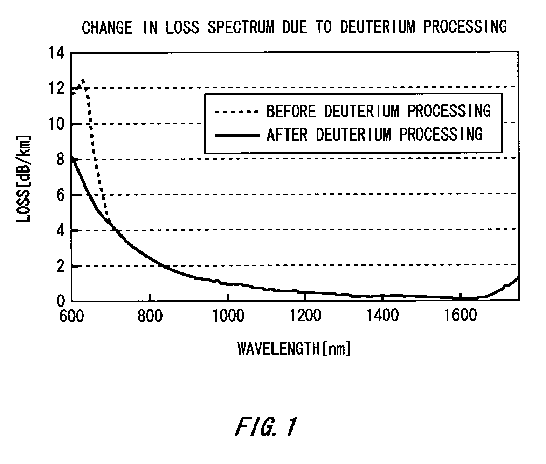

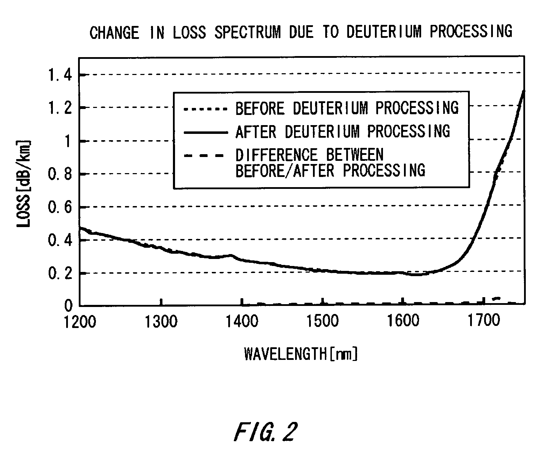

Fig. 1 is a graph showing the result of measuring the change in loss spectrum of an optical fiber due to the deuterium processing performed as in the above manner, for the preliminary evaluation sample having a length of 2km. In addition, Fig. 2 is a graph showing an enlarged view of the band from 1200 nm to 1700 nm, in the graph of Fig. 1. As shown in this drawing, at the time when the deuterium processing has ended, the loss value at 1714 nm has increased by 0.01dB/km. On the other hand, the loss value at the wavelength of 630 nm exhibits substantial decrease.

Additionally for confirmation, an evaluation test for hydrogen resistance characteristic was conducted to the preliminary evaluation sample having a length of 2 km, according to a method prescribed in IEC 60793-2. Also to the comparison sample stored without being exposed to the deuterium processing together with the preliminary evaluation sample, an evaluation test was conducted under the same condition as for the preliminary evaluation sample.

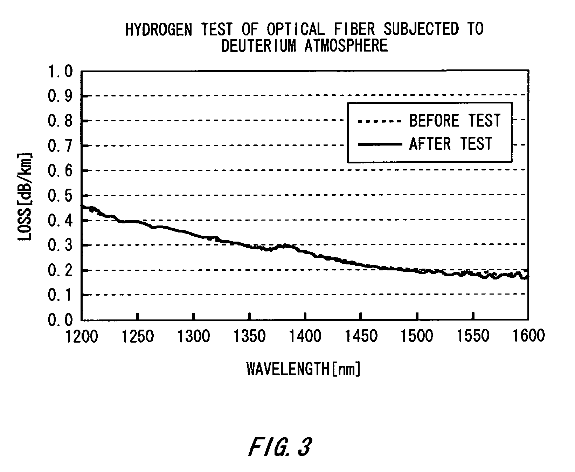

From Fig. 3, for the preliminary evaluation sample and the comparison sample, it is confirmed that the preliminary evaluation sample has a WP increase of about 0.003dB/km and has a high hydrogen resistance characteristic.

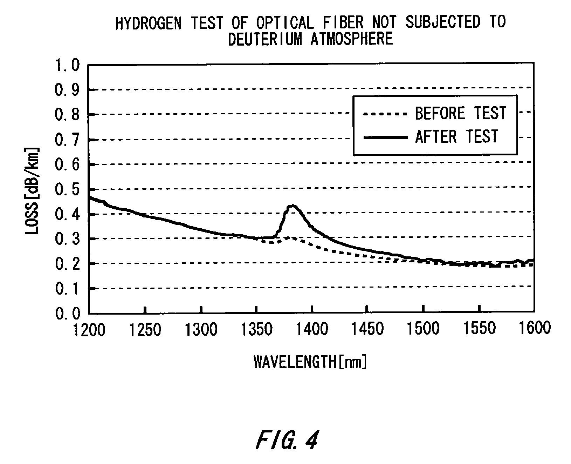

Fig. 4 is a graph showing the loss spectra for the comparison sample before and after the evaluation test. As shown in this drawing, for the comparison sample, the loss around 1383 nm has increased tremendously after the evaluation test, which has confirmed improvement in hydrogen resistance characteristic due to the deuterium processing.

Note that the loss measurement at the wavelength of 1600 nm or above for the optical fiber is largely affected by the physical stress exerted onto the optical fiber such as bending. Accordingly, the loss measurement before and after the deuterium processing and during the deuterium processing was conducted by continually fixing the optical fiber so as not to change the stress exerted onto the optical fiber. Accordingly, each of the measurements stated above was free from the influence of the change in stress exerted onto the optical fiber.

(Second Embodiment Example)

An evaluation sample having a length of 25km and a preliminary comparison sample having a length of 2km were prepared. The deuterium processing was conducted thereto under the same condition as in the first embodiment example, except for setting the change quantity of loss at the wavelength of 1714 nm at the time of ending the deuterium processing to be 0.03dB/km. After the samples were exposed to the deuterium atmosphere for about 4 days, the loss at 1714 nm being the target of monitoring has reached 0.780dB/km, and the change quantity has exceeded 0.03dB/km, and so the deuterium processing was ended.

The loss spectrum was measured for the preliminary evaluation sample having a length of 2km. The result shows a great loss reduction in the vicinity of the wavelength of 630nm. In addition, an evaluation test was conducted to the preliminary evaluation sample according to a method prescribed in IEC 60793-2. The result shows no increase in WP. These confirm that an optical fiber having an extremely high hydrogen resistance characteristic is obtained by conducting deuterium processing until the loss change quantity at 1714 nm reaches 0.03dB/km.

While an embodiment of the present invention has been described, the technical scope of the invention is not limited to the above described embodiment. It is apparent to persons skilled in the art of the invention that various alterations and improvements can be added to the above-described embodiment. It is also apparent for the scope of the claims that the embodiments added with such alterations or improvements can be included in the technical scope of the invention.

INDUSTRIAL APPLICABILITY

It becomes possible to manufacture an optical fiber having an excellent hydrogen resistance characteristic assuredly and in a short time. Consequently, it is possible to reduce the manufacturing cost, and to industrially manufacture an optical fiber product having a high hydrogen resistance characteristic.

**Claims**

1. A processing method for an optical fiber, comprising:

   starting processing to expose the optical fiber to an atmosphere that contains deuterium; and
   monitoring a loss value of the optical fiber with respect to propagation light having a wavelength at or in the vicinity of 1714 nm, and ending the processing to expose the optical fiber when a change quantity of the loss value has exceeded a predetermined value.

2. A processing method for an optical fiber, comprising:

   starting processing to expose the optical fiber to an atmosphere that contains deuterium;
   causing propagation light having a wavelength at or in the vicinity of 1714 nm to be incident from one end of the optical fiber exposed to the deuterium, monitoring the propagation light emitted from the other end of the optical fiber, and measuring a loss value of the optical fiber; and
   ending the processing to expose the optical fiber when a change quantity of the loss value has exceeded a predetermined value.

3. The processing method as set forth either in Claim 1 or Claim 2, wherein
   a wavelength for which the loss value is monitored is in the range between 1709 nm or more and 1719 nm or less.

4. The processing method as set forth in any one of Claims 1-3, wherein
   the predetermined value is a value obtained by adding 0.01 dB/km or more to the loss value at the time of starting the processing to expose the optical fiber.

5. The processing method as set forth in any one of Claims 1-3, wherein
   the predetermined range is a value obtained by adding 0.03dB/km or more to the loss value at the time of starting the processing to expose the optical fiber.

CHANGE IN LOSS SPECTRUM DUE TO DEUTERIUM PROCESSING

FIG. 1

CHANGE IN LOSS SPECTRUM DUE TO DEUTERIUM PROCESSING

FIG. 2

HYDROGEN TEST OF OPTICAL FIBER SUBJECTED TO
DEUTERIUM ATMOSPHERE

*FIG. 3*

HYDROGEN TEST OF OPTICAL FIBER NOT SUBJECTED TO
DEUTERIUM ATMOSPHERE

FIG. 4

**INTERNATIONAL SEARCH REPORT**

| | International application No. |
|---|---|
| | PCT/JP2006/308232 |

| A. CLASSIFICATION OF SUBJECT MATTER |
|---|
| *G02B6/00*(2006.01) |

According to International Patent Classification (IPC) or to both national classification and IPC

| B. FIELDS SEARCHED |
|---|
| Minimum documentation searched (classification system followed by classification symbols) |
| G02B6/00 |

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPlus(JDream2)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2005-134469 A (Shin-Etsu Chemical Co., Ltd.), 26 May, 2005 (26.05.05), Abstract; Fig. 1 & WO 2005/040872 A1 | 1-5 |
| Y | JP 2004-109213 A (The Furukawa Electric Co., Ltd.), 08 April, 2004 (08.04.04), Abstract; Par. Nos. [0025] to [0028]; Fig. 1 (Family: none) | 1-5 |
| Y | MARSHALL, A. et al. 'Hydrogen and deuterium gas-in-glass effects in single-mode optical fibres.' In: IEE PROCEEDINGS, JUNE 1985, Vol.132, Pt. J, No.3, P.172-175 | 1-5 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 May, 2006 (12.05.06) | 23 May, 2006 (23.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/308232

C (Continuation).   DOCUMENTS CONSIDERED TO BE RELEVANT

| Category* | Citation of document, with indication, where appropriate, of the relevant passages | Relevant to claim No. |
|---|---|---|
| Y | STONE, J. et al., 'Overtone Absorption and Raman Spectra of H2 and D2 in Silica Optical Fibers.' In: AT & T Bell Laboratories Technical Journal, 1984, Vol.63, No.6, P.991-1000 | 1-5 |
| Y | JP 2005-112690 A  (The Furukawa Electric Co., Ltd.), 28 April, 2005 (28.04.05), Par. Nos. [0028], [0044] & US 2005/123255 A1 | 1-5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005182468 A
- WO 1721913 A
- GB 2149392 A
- EP 1182176 A
- JP H9132430 B
- JP 2004317750 A

### Non-patent literature cited in the description

- *IEE PROCEEDINGS,* June 1985, vol. 132 (3), 172-176